Europäisches Patentamt

European Patent Office

Office européen des brevets

(19)

(11) Veröffentlichungsnummer: **0 086 432**
**B1**

# (12) EUROPÄISCHE PATENTSCHRIFT

(45) Veröffentlichungstag der Patentschrift: **19.12.90**

(51) Int. Cl.⁵: **B 25 J 19/00**

(21) Anmeldenummer: **83101149.9**

(22) Anmeldetag: **07.02.83**

(54) Sicherheitsschaltung für freiprogrammierbare Industrieroboter.

(30) Priorität: **17.02.82 DE 3205672**

(43) Veröffentlichungstag der Anmeldung:
**24.08.83 Patentblatt 83/34**

(45) Bekanntmachung des Hinweises auf die
Patenterteilung:
**19.12.90 Patentblatt 90/51**

(84) Benannte Vertragsstaaten:
**CH FR GB LI SE**

(56) Entgegenhaltungen:
**EP-A-0 037 704**
**EP-A-0 066 629**
**DE-A-3 151 831**

**TECHNISCHE UEBERWACHUNG, Band 22, Nr. 5
Mai 1981, Seite 211-215 ESSEN (DE) H. WORN:
"Sicherheitssysteme bei industrierobotern."**

(73) Patentinhaber: **Siemens Aktiengesellschaft
Wittelsbacherplatz 2
D-8000 München 2 (DE)**

(72) Erfinder: **Hiller, Rudolf, Ing. grad.
Düsseldorfer Strasse 7
D-8000 München 40 (DE)**
Erfinder: **Hartmann, Gunter, Dipl.-Ing.
Hohenwaldeckstrasse 2
D-8000 München 90 (DE)**

EP 0 086 432 B1

**Beschreibung**

Die Erfindung bezieht sich auf eine Sicherheitsschaltung für freiprogrammierbare Industrieroboter nach den Gattungsbegriffen der Ansprüche 1 und 5. Eine solche Sicherheibschaltung ist aus der Zeitschrift "TECHNISCHE UEBERWACHUNG" Band 22, Nr. 5 Mai 1981, Seiten 211 bis 215, Essen (DE) bekannt.

Industrieroboter stellen für das Bedienungspersonal eine über das bei Be- und Verarbeitungsmaschinen übliche Maß hinausgehende Gefahr dar, die aus der freien Programmierbarkeit des Industrieroboters resultiert. Durch fehlerhaftes Programmieren oder Fehler in der Steuerlogik können ungewollte und unkontrollierte Bewegungen des Industrieroboters ausgelöst werden, die eine unvorhersehbare Gefährdung des Bedienungspersonals durch Schlag, Stoß oder Einquetschen im gesamten Arbeitsbereich des Industrieroboters darstellen. Üblicherweise werden diese Gefahren durch Maßnachmen der mittelbaren Sicherheitstecknik abgewendet, wie Abschirmzäune, Trittmatten und dgl. Diese Schutzmaßnahmen müssen jedoch zum Programmieren oder Warten des Industrieroboters, insbesondere bei der Tech-In-Programmierung, außer Betrieb gesetzt werden, da der Programmierer unmittelbaren Zugang zum Arbeitsfeld des Industrieroboters haben muß. Um in diesem Falle die Gefahr für den Programmierer zu verringern, ist in der Regel ein Schleichgang und/oder eine Tippschaltung für die Antriebsmotoren der einzelnen Bewegungen des Industrieroboters vorgesehen. Da jedoch die Signale für die Bewegungen durch übliche elektrische, elektronische oder pneumatische Steuerungsgeräte erzeugt werden, können im Fehlerfall unkontrollierte Bewegungen nicht aujgeschlossen werden. Abhilfe könnten hierbei nur eigensichere Steuerungen, z.B. mehrkanalige Ausführungen, schaffen, die jedoch erhebliche zusätzliche Kosten verursachen würden.

Der Erfindung liegt daher die Aufgabe zugrunde, eine einfache Sicherheitsschaltung zu schaffen, die den Industrieroboter in dem Betriebszustand "Programmicren" so steuert bzw. überwacht, daß im Falle unkontrollierter Bewegungen ein sofortiges Stillsetzen des Industrierobobters erfolgt.

Diese Aufgabe wird bei einer gattungsgemäßen Sicherheibschaltung durch die kennreichnenden Merkmale des Anspruchs 1 gelöst.

In einfacher Weise kann die Überwachung der noch zulässigen Geschwindigkeit dadurch erfolgen, daß die Industrierobotern mit gergeltem Gleichstromantrieb die Höhe der noch zulässigen Ankerspannung überwacht wird.

Bei einem bevorzugten Ausführungsbeispiel ist in den Zuleitungen zu den Gleichstrommotoren je eine Spannungsmeßeinrichtung eingeschaltet, deren Ausgangssignale je einem Komparator zugeführt werden, die diese Ausgangssignale mit einem Sollwert vergleichen und die bei Überschreiten dieses Sollwertes die Energiezufuhr zu den elektrischen Leistungsverstärkern für die Gleichstrommotoren abschalten. Bei Industrierobotern, deren Achsen durch Schrittmotoren oder geregelte Asynchronmotoren antriebbar sind, kann in den Zuleitungen zu diesen Motoren ein Frequenz-Spannungswandler eingeschaltet sein, dessen Ausgangssignal einem Komparator zugeführt wird, der dieses Ausgangssignal mit einem Sollwert vergleicht und der bei Überschreiten der Sollfrequenz die Energiezufuhr zu den elektrischen Leistungsverstärkern für die Antriebsmotoren abschaltet.

Bei jeder Art von Industrieroboter kann der Schleichgang durch Messen der Beschleunigung überwacht werden. Dies kann gemäß einem weiteren Vorschlag der Erfindung bei einer gattungsgemäßen Sicherheitsshaltung durch die Kennzeichnenden Merkmale des Anspruchs 5 gelöst werden.

Anhand der Zeichnung, in der mehrere Ausführungsbeispiele im Prinzip dargestellt sind, wird die Erfindung näher erläutert.

Es zeigen:

Figur 1 einen im Prinzip dargestellten Industrieroboter, dessen Achsen von Gleichstrommotoren antreibbar sind mit einer Sicherheitsschaltung,

Figur 2 einen Industrieroboter gemäß Figur 1, dessen Achsen durch Schrittmotoren oder geregelte Asynchronmotoren angetrieben werden, und

Figur 3 einen Industrieroboter mit Beschleunigungsaufnehmer.

Mit 1 ist eine senkrechte Säule eines Industrieroboters angedeutet, die sich auf einem Fundament 2 in Pfeilrichtung 3 um eine senkrechte Achse drehen kann. Mit 4 ist ein entsprechender Stellanrieb bezeichnet, der im vorliegenden Fall ein Gleichstrommotor ist. Am oberen Ende der Säule 1 ist ein um eine horizontale Ebnene schwenkbarer Arm 5 angelenkt, der mit Hilfe eines Gleichstrommotors 6 in einer horizontalen Ebene bewegbar ist, wie durch einen Pfeil 7 angedeutet ist. Am freien Ende des Armes 5 ist ein weiterer Arm 8 angelenkt, der in einer Ebene bewegbar ist, die senkrecht zur Achse des Armes 5 steht. Mit einem Pfeil 9 ist die Schwekbewegung des Armes 8 angedeutet. Für die Bewegung des Armes 8 ist ein Gleichstrommotor 10 vorgesehen. Ein am vorderen Ende des Armes 8 angelenkter Greifer 11 ist in Pfeilrichtung 12 schwenkbar und wird durch einen weiteren Gleichstrommotor 13 angetrieben.

Die Steuerung der Gleichstrommotoren 4, 6, 10 und 13 erfolgt über nachfolgend als Endstufen bezeichnete elektrische Leistungsverstärker 14 bis 17 von einer Steuerlogik 18 in an sich bekannter Weise. Über eine Engangsleitung 19 werden die Endstufen 14 bis 17 von einer Stromversorgung 20 mit Energie versorgt. Diese Energieversorgung kann mit Hilfe eines Schalters 21 abgeschaltet werden, wenn beispielsweise dass Arbeitsfeld des Industrieroboters betreten wird. Dieser Schalter 21 kann beispielsweise ein Türschlater, eine Trittmatte oder dgl. sein. Diese Schutzeinrichtung muß jedoch zum Programmieren oder Warten des Industrieroboters, insbesondere bei sog. Teach-In-Programmierung außer Betrieb gesetzt werden, damit der Progammierer freien Zungang zum Arbeitsfeld hat. Für diesen Fall ist vorgesehen, daß der Schalter 21 überbrückt wird und die Steuerlogik den Gleichstrommotoren 4, 6, 10 und 13 nur eine solch hohe Spannung vorgibt, daß diese eine Art Schleichbwegung ausführen. Trotzdem kann es jedoch bei einer Störung in der Steuerlogik oder bei einer flaschen Bedienung vorkommen, daß unkontrollierte Bewegungen des Industrieroboters ausgelöst werden, die eine Gefährdung des Programmierers darstellen. Um eine solche Gefährdung auszuschalten, wird gemäß der Erfindung vorgeschlagen, daß überwacht wird, daß die zulässige Geschwindigkeit der Antriebsmotoren im Programmierbetrieb nicht überschritten wird. Bei Gleichstrommotoren ist die Höhe der Ankerspannung ein Maß dür die Geschwindigkeit der Motoren. Deshalb wird gemäß der Erfindung in die Zuleitungen 22 bis 25 je eine Spannungsmeßeinrichtung 26 bis 29 eingeschaltet, die beispielsweise ein Gleichspannungswandler sein kann. Die Ausgangssignale der Spannungsmeßeinrichtungen 26 bis 29 werden Komparatoren 30 bis 33 zugeleitet, die beispielsweise Schmitt-Trigger sein können und die eine Schaltschwelle aufweisen, die etwas oberhalb des Schleichganges der Gleichstrommotoren liegt. Die Ausgänge der Komparatoren 30 bis 33 werden einer ODER-Stufe 34 zugeführt, die ein Relais 35 ansteuert, dessen Kontakt 35' in der Zuleitung 19 der Endstufen 14 bis 17 liegt. Wird der Schleichgang von irgendeinem der Gleichstrommotoren 4, 6, 10 oder 13 überschritten, wird die Eingangsleitung 19 und damit die Stromversorgung der Endstufen 14 bis 17 unterbrochen.

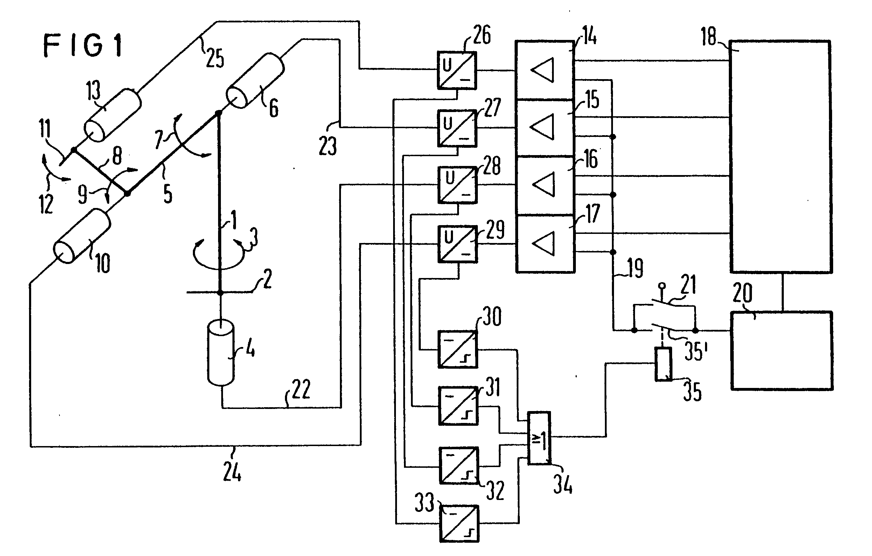

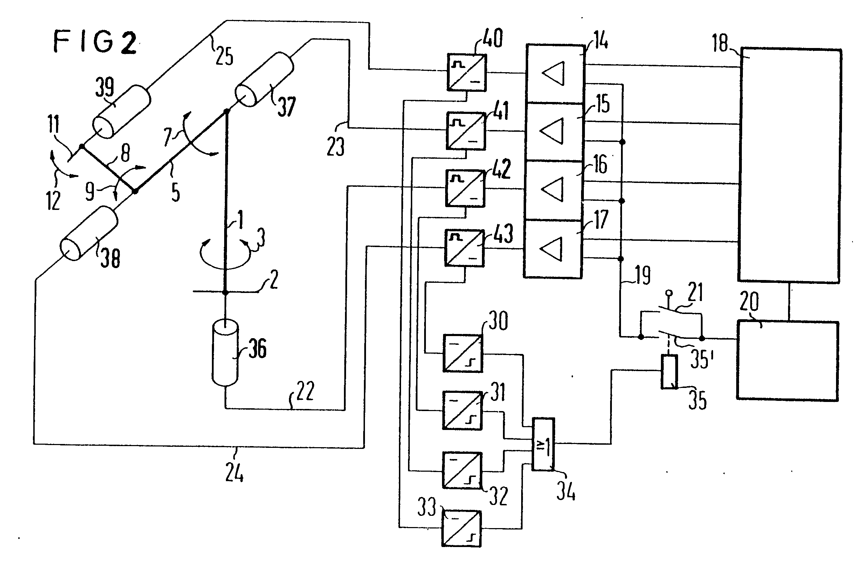

Figur 2 zeigt eine der Figur 1 entsprechende Schaltung, wobei jedoch anstelle der Gleichstrommotoren 4, 6, 10 und 13 Schrittmotoren 36 bis 39 verwendet sind, die über die Zuleitungen 22 bis 25 entsprechende Impulse erhalten, die von der Steuerlogik 18 über die Endstufen 14 bis 17 angesteuert werden. In den Zuleitungen 22 bis 25 sind anstelle der Spannungsmeßeinrichtungen 26 bis 29 gemäß Figur 1 Frequenz-Spannungswandler 40 bis 43 vorgesehen, deren Ausgänge mit Eingängen von Komparatoren 30 bis 33 verbunden sind. Letztere steuern über ODER-Stufe 34 ein Relais 35 an, dessen Kontakt 35' die Eingangsleitung 19 der Stromversorgung der Endstufen 14 bis 17 unterbricht, wenn einer der Motoren 36 bis 39 eine Geschwindigkeit erreicht, die über einer vorgegebenen Sollfrequenz liegt.

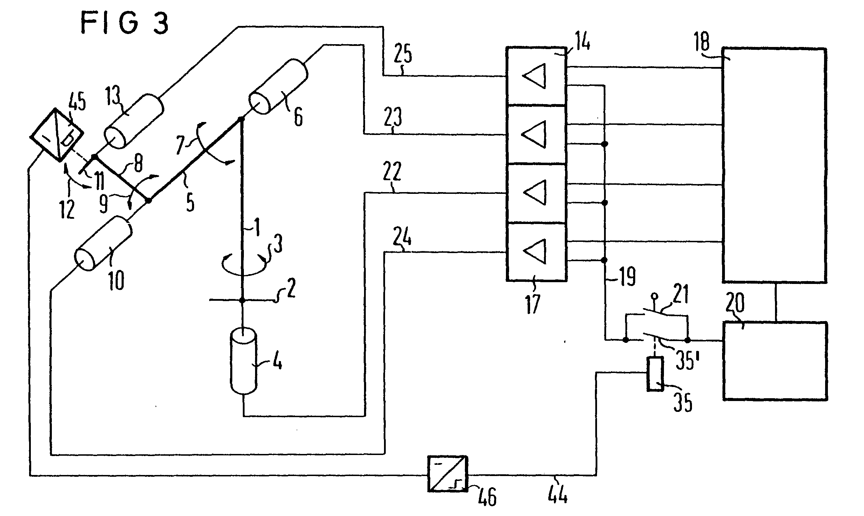

Figur 3 zeigt ein Ausführungsbeispiel, bei dem die Antriebsmotoren 4, 6, 10 und 13 sowohl geregelte Gleichstrommotoren als auch Motoren irgendeiner Art sein können. Diese Motoren erhalten wie zuvor über Zuleitungen 22 bis 25 und Endstufen 14 bis 17 ihre Steuersignale von der Steuerlogik 18. Die Stromversorgung 20 versorgt sowohl die Steuerlogik 18 als auch über die Eingangsleitung 19 die Endstufen 14 bis 17 mit Strom. Mit 21 ist wiederum ein Schalter bezeichnet, der beim Programmierbetrieb geöffnet wird, während der Kontakt 35' des Relais 35 beim Programmierbetrieb geschlossen wird. Das Relais 35 steht über eine Verbindungsleitung 44 mit einem Beschleunigungsaufnehmer 45 in Verbindung, der mit dem Greifer 11 mechanisch verbunden ist. Der Beschleunigungsaufnehmer 45 gibt eine der jeweiligen Beschleunigung entsprechende Spannungs ab. Die Ausgangssignale des Beschleunigungsaufnehmers 45 werden wiederum einem Komparator 46 zugeführt, der wie zuvor das Relais 35 steuert. Bei dem Ausführungsbeispiel gemäß Figur 3 wird also der Schleichgang durch Messen der Beschleunigung überwacht. Hierzu ist der Beschleunigungsaufnehmer 45 an einen Punkt des Greifers 11 befestigt, der durch Erhöhung der Geschwindigkeit für das Personal eine Gefahr darstellt. Wird die zulässige Besch eunigung des Greifers 11 überschritten, wird über den Komparator 46 das Relais 35 angesteuert, das die Energiezuführ zu den Endstufen 14 bis 17 abschaltet.

Der Vorteil der erfindungsgemäßen Sicherheitsschaltung liegt darin, daß erstens wegen des überschaubaren Aufwandes an Bauelementen eine zweikanalige Ausführung zur Erhöhung der Sicherheit wirtschaftlich vertretbar ist und zweitens die Sicherheitseinrichtung so von der Steuerung des Industrieroboters getrennt ist, daß die Funktion durch Fehler in der Steuerung des Industrieroboters nicht beeinträchtigt wird.

**Patentansprüche**

1. Sicherheitsschaltung für einen freiprogrammierbaren Industrierobotoer, mit einem Unterbrechersystem (21), das den Industrierobototer bei Betreten seines Arbeitsfeldes durch Personen unmittelbar stillsetzt, wobei die Sicherheitsschaltung den besonderen Betriebszustand "Programmieren" oder "Warten" erlaubt, indem das Unterbrechersystem (21) überbrückt wird, und gleichzeitig die Geschwindigkeit der Antriebsmotore von dem Programm auf ein Schleichgeschwindigkeit begrenzt wird, dadurch gekennzeichnet, daß die beim besonderen Betriebszustand "Programmieren" für noch zulässig gehaltene Geschwindigkeit der Antriebsmotore für die einzelnen Bewegungen unabhängig von der Programmverarbeitung im Rechner des Industrieroboter überwacht wird, und daß bei Überschreitung der für noch zulässig gehaltenen Geschwindigkeit eine unmittelbare Abschaltung des Industrieroboters durch Abschaltung der Energiezufuhr zu vom Programm des Industrieroboters steuerbaren elektrischen Leistungsverstärkern (14 bis 17) für die Antriebsmotoren (4, 6, 10, 13; 36 bis 39) erfolgt.

2. Sicherheitsschaltung nach Anspruch 1, dadurch gekennzeichnet, daß bei Industrierobotern mit geregelten Gleichstrommotoren (4, 6, 10, 13) die Höhe der noch zulässigen Ankerspannung überwacht wird.

3. Sicherheitsschaltung nach Anspruch 2, dadurch gekennzeichnet, daß in jede der Zuleitungen (22 bis 25) zu den Gleichstromotoren (4, 6, 10, 13) je eine Spannungsmeßeinrichtung (26 bis 29) eingeschaltet ist, deren Ausgangssignale je einem Komparator (30 bis 33) zugeführt werden, die diese Ausgangssignale mit einem Sollwert vergleichen und die bei Überschreiten dieses Sollwertes die Energiezufuhr zu den elektrischen Leistungsverstärken (14 bis 17) für die Gleichstrommotoren (4, 6, 10, 13) abschalten.

4. Sicherheitsschaltung nach Anspruch 1, dadurch gekennzeichnet, daß bei Industrierobotern, deren Achsen durch Schrittmotore (36 bis 39) oder geregelte Asynchronmotoren antriebbar sind, in jede der Zuleitungen (22 bis 25) zu diesen Schrittmotoren (36 bis 39) je ein Frequenz-Spannungswandler (40 bis 43) eingeschaltet ist, deren Ausgangssignale je einem Komparator (30 bis 33) zugeführt werden, die diese Ausgangssignale mit einem Sollwert vergleichen und die bei Überschreiten der Sollfrequenz die Energizeufuhr zu den elektrischen Leistungsverstärkern (14 bis 17) für die Antreibsmotoren (36 bis 39) abschalten.

5. Sicherheitsschaltung für einen freiprogrammierbaren Industrieroboter, mit einem Unterbrechungssystem (21), das den Industrieroboter bei Betreten seines Arbeitsfeldes durch Personen unmittelbar stillsetzt, wobei die Sicherheitsschaltung den besonderen Betreibzustand "Programmieren" oder "Warten" erlaubt, indem des Unterbrechungssystem (21) überbrückt wird, und gleichzeitig die Geschwindigkeit der Antriebsmotoren von dem Programm auf eine Schleichgeschwindigkeit begrenzt wird, dadurch gekennzeichnet, daß die beim besonderen Betriebszustand "Programmieren" für noch zulässig gehaltene Beschleunigung an einer Stelle des Armes des Industrieroboters, die bei Erhöhung der Geschwindigkeit für das Personal eine Gefahr darstellt, durch einen dort angebrachten Beschleunigungsaufnehmer (45) überwacht wird und daß das Ausgangssignal des Beschleunigungsaufnehmers (45) einem Komparator (46) zugeführt ist, der bei Überschreiten der zulässigen Beschleunigung einen Schalter (35') öffnet, womit die Energiezufuhr zu von dem Programm des Industrieroboters steuerbaren elektrischen Leistungsverstärkern (14 bis 17) für die Antriebsmotoren (4, 6, 10, 13) unterbrochen wird.

**Revendications**

1. Circuit de sécurité pour un robot industriel librement programmable, comportant un système formant disjoncteur (21), qui arrête immédiatement le robot industriel lorsque des personnes pénètrent dans sa zone de travail, le circuit de sécurité permettant d'obtenir l'état de fonctionnement particulier "programmation" ou "attente", dans lequel le système formant disjointeur (21) est shunté, et simultanément la vitesse du moteur d'entraînement est limitée par le programme à une faible vitesse, caractérisé par le fait que la vitesse des moteurs d'entraînement pour les différents déplacements, qui est considérée comme étant encore admissible dans l'état de fonctionnement particulier "programmation", est contrôlée indépendamment du traitement du programme dans le calculateur du robot industriel, et que, lors du dépassement de la vitesse considérée comme encore admissible, un arrêt immédiat du robot industriel est obtenu au moyen d'une interruption de l'envoi d'énergie à des amplificateurs électriques de puissance (14 à 17), qui peuvent être commandés par le programme du robot industriel, pour les moteurs d'entraînement (4, 6, 10, 13; 36 à 39).

2. Circuit de sécurité suivant la revendication 1, caractérisé par le fait que dans le cas de robots industriels comportant des moteurs à courant continu (4, 6, 10, 13) réglables, l'amplitude de la tension d'induit encore admissible est contrôlée.

3. Circuit de sécurité suivant la revendication 2, caractérisé par le fait que dans chacune des lignes d'alimentation (22 à 25) aboutissant aux moteurs à courant continu (4, 6, 10, 13) est branché respectivement un dispositif (26 à 29) de mesure de la tension, dont les signaux de sortie sont envoyés à des comparateurs respectifs (30 à 33), qui comparent ces signaux de sortie à valeur de consigne et, lors du dépassement de cette valeur de consigne, interrompent l'envoi d'énergie aux amplificateurs de puissance (14 à 17) prévus pour les moteurs à courant continu (4, 6, 10, 13).

4. Circuit de sécurité suivant la revendication 1, caractérisé par le fait que dans le cas de robots industriels, dont les axes doivent être entraînés par des moteurs pas-à-pas (36 à 39) ou par des moteurs asynchrones réglés, dans chacune des lignes d'alimentation (22 à 25) aboutissant à ces moteurs pas-à-pas (36 à 39) est branché respectivement un convertisseur fréquence-tension (40 à 43), les signaux de sortie de ces convertissuers étant envoyés à des comparateurs respectifs (30 à 33), qui comparent ces signaux de sortie à une valeur de consigne et qui, lors du dépassement de fréquences de consigne, interrompent l'envoi d'énergie aux amplificateurs électriques de puissance (14 à 17) pour les moteurs d'entraînement (36 à 39).

5. Circuit de sécurité pour un robot industriel librement programmable, comportant un système formant disjoncteur (21), qui arrête immédiatement le robot industriel lorsque des personnes pénètrent dans sa zone de travail, le circuit de sécurité permettant d'obtenir l'état de fonctionnement particulier "programmation" ou "attente", dans lequel le système formant disjointeur (21) est shunté, et simultanément la vitesse du moteur d'entraînement est limitée par le programme à une faible vitesse, caractérisé par le fait que l'accélération, considérée comme encore admissible dans le cas de l'état de fonctionnement particulier "programmation", est contrôlée en un emplacement du bras du robot industriel, qui représente un risque pour le personnel lors de l'accroissement de la vitesse, et contrôlée par un capteur d'accélération (45) installé en cet endroit et qu le signal de sortie du capteur d'accélération (45) est envoyé à un comparateur (46), qui, lors du dépassement de l'accélération admissible, ouvre l'interrupteur (35'), ce qui interrompt l'envoi d'énergie aux amplificateurs électriques de puissance (14 à 17) qui peuvent être commandés par le programme du robot industriel et sont prévus pour les moteurs d'entraînement (4, 6, 10, 13).

## Claims

1. Safety circuit for a free programmable industrial robot, having an interrupt system (21), which immediately stops the industrial robot when its working zone is entered by persons, the safety circuit permitting the particular operational condition of "programming" or "waiting" in that the interrupt system (21) is short-circuited, and at the same time the speed of the drive motors is limited by the program to crawling speed, characterized in that the speed of the drive motors for the individual motions that is considered to be still permissible in the case of the particular operational condition of "programming" is monitored in the computer of the industrial robot independently of the program processing, and in that upon overshooting of the speed that is considered to be still permissible there is an immediate shutdown of the industrial robot by disconnection of the energy supply to electric power amplifiers (14 to 17) for the drive motors (4, 6, 10, 13; 36 to 39), which amplifiers can be controlled by the program of the industrial robot.

2. Safety circuit according to Claim 1, characterized in that in the case of industrial robots with controlled d.c. motors (4, 6, 10, 13) the level of the still permissible armature voltage is monitored.

3. Safety circuit according to Claim 2, characterized in that in each of the supply leads (22 to 25) to the d.c. motors (4, 6, 10, 13) there is inserted one voltage measuring device (26 to 29) each, whose output signals are fed, in each case, to a comparator (30 to 33), which compare these output signals with a desired value, and which upon overshooting of this desired value disconnect the energy supply to the electric power amplifiers (14 to 17) for the d.c. motors (4, 6, 10, 13).

4. Safety circuit according to Claim 1, characterized in that the case of industrial robots whose axes can be driven by stepping motors (36 to 39) or controlled asynchronous motors, one frequency-voltage converter (40 to 43) each is inserted in each of the supply leads (22 to 25) to these stepping motors (36 to 39), the output signals of which frequency-voltage converters are fed to a comparator (30 to 33) in each case, which compares these output signals with a desired value, and upon overshooting of the desired voltage disconnects the energy supply to the electric power amplifiers (14 to 17) for the drive motors (36 to 39).

5. Safety circuit for a free programmable industrial robot, having an interrupt system (21), which immediately stops the industrial robot when its working zone is entered by persons, the safety circuit permitting the particular operational condition of "programming" or "waiting" in that the interrupt system (21) is short-circuited, and at the same time the speed of the drive motors is limited by the program to crawling speed, characterized in that, the acceleration that is considered to be still permissible, in the case of the particular operational condition of "programming" at a site of the arm of the industrial robot which represents a danger to personnel upon increase in speed is monitored by an acceleration pick-up (45) attached there, and in that the output signal of the acceleration pick-up (45) is fed to a comparator (46), which upon overshooting of the permissible acceleration opens a switch (35'), whereupon the energy supply to the electric power amplifiers (14 to 17) for the drive motors (4, 6, 10, 13), which power amplifiers can be controlled by the program of the industrial robot, is interrupted.

FIG 1

1

FIG 2

FIG 3

EP 0 086 432 B1